# EUROPEAN PATENT APPLICATION

(11) **EP 3 893 216 A1**
(43) Date of publication of application: **13.10.2021**
(21) Application number: 19893897.9
(22) Date of filing: 16.10.2019
(51) Int. Cl.: G08G 1/00, G01D 5/353, G08G 1/09

(54) **ROAD MONITORING SYSTEM, ROAD MONITORING DEVICE, ROAD MONITORING METHOD, AND NON-TRANSITORY COMPUTER-READABLE MEDIUM**

(30) Priority: 06.12.2018 JP 2018229185
(71) Applicant: NEC Corporation, 108-8001 Tokyo (JP)
(72) Inventor: YODA Yukihide, Tokyo 108-8001 (JP); AONO Yoshiaki, Tokyo 108-8001 (JP)
(74) Representative: Vossius & Partner Patentanwälte Rechtsanwälte mbB
(86) International application number: PCT/JP2019/040708
(87) International publication number: WO 2020/116032

(57) **Abstract**

A road monitoring system according to the present disclosure includes: a cable (20) including a communication optical fiber, being laid on a road (10); a reception unit (331) configured to receive an optical signal from at least one communication optical fiber included in the cable (20); and a detection unit (332) configured to detect a pattern according to a state of the road (10), based on the optical signal, and detect an abnormal state of the road (10), based on the detected pattern according to the state of the road (10).

## Description

### Technical Field

The present disclosure relates to a road monitoring system, a road monitoring device, a road monitoring method, and a non-transitory computer-readable medium.

### Background Art

Abnormality detection of roads has been made often by manpower. For example, a worker used to monitor, visually or by using a thermography camera or the like, any abnormality in the road surface temperature, such as road surface freezing, or monitor, visually or by using a camera, occurrence of a landslide or invasion of an animal or a human into an expressway or the like. Abnormality detection by manpower requires enormous costs and time, which may delay abnormality detection or subsequent suitable countermeasures.

In view of this problem, a system has recently been proposed for monitoring road abnormalities by using an optical fiber (as described in Patent Literature 1, for example).

The technique described in Patent Literature 1 is used to lay down an optical fiber on a roadside, and when a large external force, for example from a rockfall, is exerted on the optical fibers, detect the rockfall on the road based on a change in polarization of an optical signal in the optical fiber. In order to prevent a possible malfunction due to any other cause than a rockfall, an optical fiber cable is coated with a steel wire coating for prevention of flaws.

### Citation List

### Patent Literature

Patent Literature 1: Japanese Unexamined Patent Application Publication No. 2000-180219

### Summary of Invention

### Technical Problem

The technique described in Patent Literature 1 performs abnormality detection of a road through monitoring of polarization of an optical signal observed when a large stress is exerted on an optical fiber is.

Therefore, there remains a problem: while it is possible to detect an extreme state such as a rockfall on a road, it is difficult to detect a state that will hardly influence a stress on an optical fiber.

On the other hand, in recent years, there is an additional growing demand for detecting various changes in road environment such as a road surface temperature with the spread of IoT (Internet of Things), for example. However, a change in road environment, for example, is very unlikely to trigger a conspicuous change in stress on an optical fiber.

An object of the present disclosure is to provide a road monitoring system, a road monitoring device, a road monitoring method, and a non-transitory computer-readable medium that can solve the above-described problem and detect, with high accuracy, an abnormal state of a road.

### Solution to Problem

A road monitoring system according to one aspect includes:
a cable including a communication optical fiber, being laid on a road;
a reception unit configured to receive an optical signal from at least one communication optical fiber included in the cable; and
a detection unit configured to detect a pattern according to a state of the road, based on the optical signal, and detect an abnormal state of the road, based on the detected pattern according to the state of the road.

A road monitoring device according to one aspect includes:
a reception unit configured to receive an optical signal from at least one communication optical fiber included in a cable laid on a road; and
a detection unit configured to detect a pattern according to a state of the road, based on the optical signal, and detect an abnormal state of the road, based on the detected pattern according to the state of the road.

A road monitoring method according to one aspect is a road monitoring method by a road monitoring device, the method including:
receiving an optical signal from at least one communication optical fiber included in a cable laid on a road; and
detecting a pattern according to a state of the road, based on the optical signal, and detecting an abnormal state of the road, based on the detected pattern according to the state of the road.

A non-transitory computer-readable medium according to one aspect is a non-transitory computer-readable medium that stores a program for causing a computer to execute:
a procedure of receiving an optical signal from at least one communication optical fiber included in a cable laid on a road; and
a procedure of detecting a pattern according to a state of the road, based on the optical signal, and detecting an abnormal state of the road, based on the detected pattern according to the state of the road.

### Advantageous Effects of Invention

According to the above-described aspects, there are obtained advantageous effects of being able to detect, with high accuracy, an abnormal state of a road.

### Brief Description of the Drawings

Fig. 1 illustrates an example of a configuration of a road monitoring system according to an example embodiment;
Fig. 2 illustrates an example of machine learning via a method B in the road monitoring system according to the example embodiment;
Fig. 3 illustrates an example of abnormality level information according to the example embodiment;

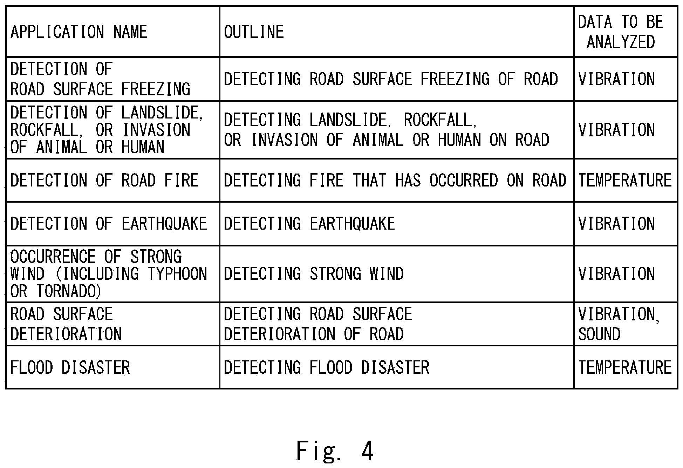

Fig. 4 illustrates an example of an application that can be achieved based on an abnormal state detected by a detection unit according to the example embodiment;
Fig. 5 is a block diagram illustrating an example of a hardware configuration of a computer to achieve the road monitoring device according to the example embodiment;
Fig. 6 is a flowchart illustrating an example of an operation flow of the road monitoring system according to the example embodiment;
Fig. 7 illustrates an example of a road monitoring system according to other example embodiments;
Fig. 8 illustrates another example of the road monitoring system according to other example embodiments;
Fig. 9 illustrates an example of an arrangement of a fiber sensing unit in the road monitoring system according to other example embodiments;
Fig. 10 illustrates another example of the arrangement of the fiber sensing unit in the road monitoring system according to other example embodiments;
Fig. 11 illustrates yet another example of the arrangement of the fiber sensing unit in the road monitoring system according to other example embodiments;
Fig. 12 illustrates still another example of the arrangement of the fiber sensing unit in the road monitoring system according to other example embodiments;
Fig. 13 illustrates an example of an operation of the fiber sensing unit upon occurrence of an optical fiber cable in the road monitoring system of Fig. 9;
Fig. 14 illustrates an example of the operation of the fiber sensing unit upon breakage of the optical fiber cable in the road monitoring system of Fig. 10;
Fig. 15 illustrates an example of the operation of the fiber sensing unit upon breakage of the optical fiber cable in the road monitoring system of Fig. 12;

### Description of Embodiments

Hereinafter, example embodiments of the disclosure are described with reference to the drawings.

### <Example Embodiment>

### <Configuration of Example Embodiment>

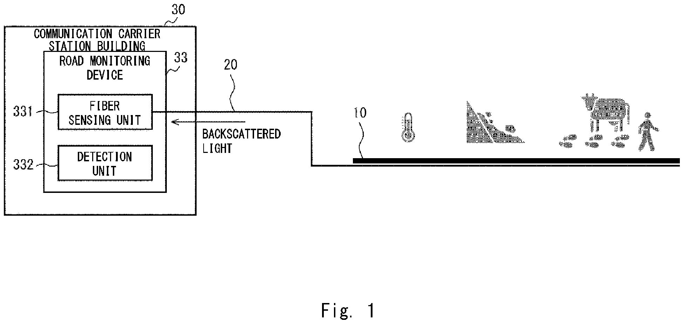

First, a configuration of a road monitoring system according to an example embodiment is described with reference to Fig. 1.

As illustrated in Fig. 1, a road monitoring system according to the example embodiment is designed to detect an abnormal state of a road 10 and includes an optical fiber cable 20 and a road monitoring device 33.

The optical fiber cable 20 is laid down along the road 10. While the optical fiber cable 20 is laid down under the road 10 in Fig. 1, this is not limitative but the optical fiber cable 20 may be laid down, for example, on a side of the road 10. For a location where, among others, a state of the road 10 is to be detected, the optical fiber cable may be densely arranged, for example, via a loop configuration of the optical fiber cable 20. This improves an abnormality detection percentage of the road 10.

The optical fiber cable 20 is a cable that includes one or more communication optical fibers with a coating applied thereon, and one end thereof is routed into a communication carrier station building 30.

the road monitoring system according to the example embodiment detects an abnormal state of the road 10 by using an optical fiber sensing technique that employs an optical fiber as a sensor.

To be precise, inside the communication carrier station building 30, a pulsed light is incident into a communication optical fiber included in the optical fiber cable 20. As the pulsed light is transmitted through the communication optical fiber in the direction of the road 10, a backscattered light is generated at every predetermined transmission distance. The backscattered light returns to the inside of the communication carrier station building 30 via the same communication optical fiber.

The road 10 vibrates upon occurrence of a landside or the like. Vibration of the road 10 is transmitted to the communication optical fiber. A temperature of the road 10 rises when a fire or the like occurs and a change in the temperature of the road 10 is also transmitted to the communication optical fiber. On the road 10, upon occurrence of a road surface deterioration or the like, a sound according to the road surface deterioration is generated. A change in sound is also transmitted to the communication optical fiber. Patterns of transmission of a vibration, a temperature and a sound on the road 10 through the communication optical fiber are different depending on a state of the road 10, including: whether a road surface temperature is abnormal or not; whether a landside or a rockfall has occurred; whether an animal or a human has invaded into an expressway; whether a fire has occurred, whether an earthquake has occurred; whether a strong wind, including a typhoon and a tornado, has occurred, whether a road surface is deteriorated; and whether a flood disaster has occurred.

The backscattered light that returns into the communication carrier station building 30 includes a pattern according to the state of the road 10. In the example of Fig. 1, the backscattered light returning into the communication carrier station building 30 includes a pattern according to the state of any of a variety of locations on the road 10.

The road monitoring system according to the example embodiment takes advantage of a pattern according to the state of the road 10 included in the backscattered light returning into the communication carrier station building 30 to detect an abnormal state of the road 10 including: an abnormal road surface temperature; a landslide or a rockfall; invasion of an animal or a human into an expressway; a fire; an earthquake; a strong wind such as a typhoon and a tornado; and road surface deterioration.

Inside the communication carrier station building 30 is arranged the above-described road monitoring device 33. The road monitoring device 33 is a facility that is installed anew to achieve the example embodiment.

The road monitoring device 33 includes a function as an optical fiber sensing device as well as a function to detect an abnormal state of the road 10. To be specific, the road monitoring device 33 includes a fiber sensing unit 331 and a detection unit 332. The fiber sensing unit 331 is an example of a reception unit.

The fiber sensing unit 331 makes a pulsed light incident into at least one communication optical fiber included in the optical fiber cable 20. The pulsed light is transmitted in the direction of the road 10. The fiber sensing unit 331 receives a backscattered light for the pulsed light from the same communication optical fiber into which the pulsed light was incident. The backscattered light is received from the direction of the road 10.

As described earlier, the backscattered light received by the fiber sensing unit 331 includes a pattern according to a state of the road 10. In the example of Fig. 1, the fiber sensing unit 331 receives a backscattered light generated on various locations on the road 10 in chronological order.

Accordingly, the fiber sensing unit 331, receiving a backscattered light, first identifies a location on the road 10 where the backscattered light was generated. Further, the fiber sensing unit 331 detects a vibration state, a temperature state, a sound state or the like of an identified location.

The detection unit 332 detects a pattern according to a state of the identified location on the road 10 based on a processing result of the backscattered light by the fiber sensing unit 331 and then detects an abnormal state of the identified location on the road 10 based on the detected pattern.

First, a method is described below for identifying a location where a backscattered light received in the fiber sensing unit 331 was generated.

In the example embodiment, the fiber sensing unit 331 identifies a location where a backscattered light was generated, based on a time difference between the time when a pulsed light was made incident into a communication optical fiber and the time when a backscattered light was received from the same communication optical fiber. In this process, the fiber sensing unit 331 identifies a location so that the location will be closer to the fiber sensing unit 331 as the above-described time difference becomes smaller.

A method is described below for detecting, in the detection unit 332, an abnormal state of the road 10.

### (A) Method A

First, a method A for detecting an abnormal state of the road 10 is described below.

The fiber sensing unit 331 performs processing to identify a location on the road 10 where a backscattered light received from a communication optical fiber was generated. Further, the fiber sensing unit 331 performs processing to detect a vibration state, a temperature state, a sound state or the like, of an identified location on the road 10 through detection of the backscattered light by the use of a Distributed Acoustic Sensor, a Distributed Vibration Sensor or a Distributed Temperature Sensor or the like.

The detection unit 332 thus detects a pattern according to a state of the road 10 based on the processing result of the backscattered light by the fiber sensing unit 331.

The detection unit 332 holds an association table that associates a pattern according to a state of the road 10 with the state of the road 10. Thus, when detecting an abnormal state of the road 10, the detection unit 332 first detects a pattern according to a state of the road 10. Then, the detection unit 332 uses the above-described association table to identify a pattern according to a state of the road 10 corresponding to a state of the road 10 acquired above, thereby determining whether the road 10 is in an abnormal state or not.

### (B) Method B

Next, a method B for detecting an abnormal state of the road 10 is described.

In the method B, the detection unit 332 performs machine learning such as deep learning of a pattern according to a state of the road 10 and detects an abnormal state of the road 10 by using a training result (initial training model) of the machine learning.

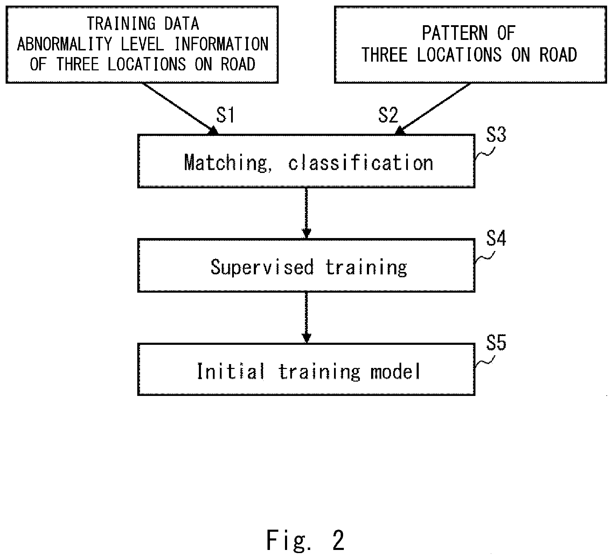

First, a method of machine leaning in the method B is described with reference to Fig. 2. Here, a method of learning for learning, as training data, a pattern of three locations on the road 10 distant by xx[km], yy[km], and zz[km] respectively, from the fiber sensing unit 331.

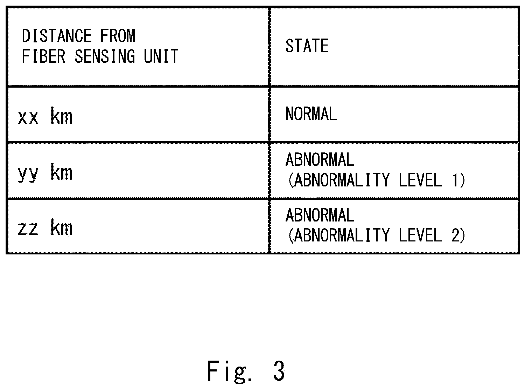

As illustrated in Fig. 2, the detection unit 332 inputs training data as abnormality level information indicating the degree of an abnormality on the three locations on the road 10 and a pattern according to a state of the three locations (steps S1 and S2). Fig. 3 illustrates an example of abnormality level information. Fig. 3 indicates that, the higher the abnormality level is in numerical value, the more serious the abnormality is. The abnormality level information is held by the detection unit 332.

Next, the detection unit 332 performs matching and classification of the training data and the pattern according to the state of the three locations (step S3) and performs supervised training (step S4). This obtains an initial training model (step S5). The initial training model uses a pattern according to a state of the road 10 as an input and outputs the state of the road 10.

Next, a method for detecting an abnormal state of the road 10 in the method B is described.

When detecting an abnormal state of the road 10, the detection unit 332 first detects a pattern according to a state of the road 10, as in the above-described method A. Next, the detection unit 332 inputs the pattern into the initial training mode. The detection unit 332 thus obtains a state of the road 10 as an output result of the initial training model, and determines whether the road 10 is in an abnormal state or not.

As described above, the method B performs machine learning of a pattern according to a state of the road 10 and detects an abnormal state of the road 10 by using the training result of the machine learning.

It may be difficult for a human-based analysis to extract, from data in use, a characteristic used to detect a state of the road 10. The method B builds a training model from a large quantity of patterns to detect with high accuracy an abnormal state of the road 10, even when a human-based analysis would have difficulties in attaining this goal.

In the machine learning in the method B, a training model may be generated based on two or more pieces of machine data in an initial state. The training model may be caused to learn anew an additionally detected pattern. In that practice, detailed conditions to detect an abnormal state of the road 10 may be adjusted based on the new training model.

Next, an application that can be achieved based on the abnormal state of the road 10 detected by the detection unit 332 is described below with reference to Fig. 2.

For example, the following applications (a) to (g) can be achieved based on the abnormal state of the road 10 detected by the detection unit 332. These applications are described below.

### (a) Detection of road surface freezing

### Problem and advantageous effects:

Road surface freezing of the road 10 may trigger a traffic accident, so that it is necessary to appropriately grasp how far the road surface is frozen in which section.

### Outline of operation:

Monitoring a surface temperature of the road 10 via the optical fiber cable 20 laid down under the road 10 and detecting a temperature equal to or below a prespecified temperature as road surface freezing.

### (b) Detection of a landslide, a rockfall, or invasion of an animal or a human

### Problem and advantageous effects:

Remotely detecting in real time an occurrence of a landslide or a rockfall, or invasion of an animal or a human allows for timely notification to a driver of a vehicle (automobile) and prompt countermeasures for a hazardous zone.

### Outline of operation:

Monitoring a vibration generated by a landslide, a rockfall, or invasion of an animal or a human via the optical fiber cable 20 laid down under the road 10 and detecting an abnormality based on a characteristic of a vibration pattern.

The optical fiber cable 20 may be laid down on a fence or a slope of a mountain.

### (c) Detection of road fire

### Problem and advantageous effects:

Remotely monitoring a situation in real time allows for prompt firefighting activities.

### Outline of operation:

Monitoring a surface temperature of the road 10 via the optical fiber cable 20 laid down under the road 10 and detecting a temperature equal to or above a prespecified temperature as a fire.

### (d) Detection of earthquake

### Problem and advantageous effects:

Monitoring a vibrating situation in a wide area can grasp a location of an earthquake and propagation of the earthquake and allows for quick announcement of the earthquake and prompt understanding of the situation.

### Outline of operation:

Detecting a seismic center and a seismic velocity by monitoring a vibration of the optical fiber cable 20 laid down under the road 10 and analyzing a vibration situation in a wide area.

### (e) Occurrence of a strong wind (including a typhoon or a tornado)

### Problem and advantageous effects:

Remotely detecting a wind velocity throughout the road 10 to evade traveling of a vehicle into a hazardous zone.

### Outline of operation:

Monitoring a wind velocity from a vibration of the optical fiber cable 20 laid down along the road 10.

Detecting a wind whose velocity exceeds a predetermined threshold as a strong wind.

### (f) Road surface deterioration

### Problem and advantageous effects:

Monitoring of a crack or a deteriorated state of a road surface throughout the road 10 reduces a workload of an inspection by manpower.

### Outline of operation:

Monitoring a sound or a vibration generated on the road 10.

Detecting road surface deterioration based on a characteristic of a vibration pattern.

### (g) Flood Disaster

### Problem and advantageous effects:

Remotely detecting a flood disaster situation throughout the road 10 to evade traveling of a vehicle into a hazardous zone.

### Outline of operation:

Remotely identifying a location where a change in temperature is conspicuous from a temperature situation throughout the road 10 and determining an occurrence of a flood disaster.

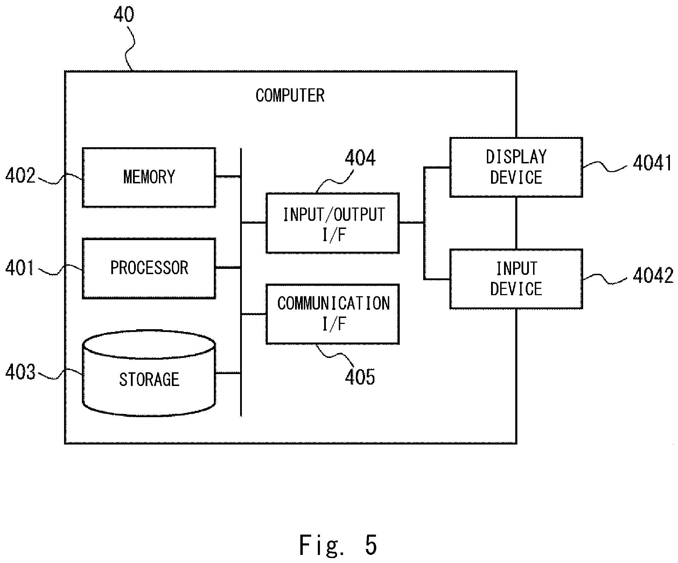

Next, a hardware configuration of a computer 40 to achieve the road monitoring device 33 is described with reference to Fig. 5.

As illustrated in Fig. 5, a computer 40 includes a processor 401, a memory 402, a storage 403, an input/output interface (input/output I/F) 404, and a communication interface (communication I/F) 405. The processor 401, the memory 402, the storage 403, the input/output interface 404, and the communication interface 405 are interconnected via a data transmission path for transmitting/receiving data to/from each other.

The processor 401 is an arithmetic processing unit such as a CPU (Central Processing Unit) or a GPU (Graphics Processing Unit). The memory 402 is a memory such as a RAM (Random Access Memory) or a ROM (Read Only Memory). The storage 403 is a storage device such as an HDD (Hard Disk Drive), an SSD (Solid State Drive), or a memory card. The storage 403 may be a memory such as a RAM or a ROM.

The storage 403 stores programs that achieve a function of the fiber sensing unit 331 and the detection unit 332 included in the road monitoring device 33. The processor 401 achieves the function of the fiber sensing unit 331 and the detection unit 332 by executing these programs. When executing the programs, the processor 401 may read the program onto the memory 402 before execution, or may directly execute the programs without reading the program onto the memory 402. The memory 402 or the storage 403 plays a role of storing information or data held by the fiber sensing unit 331 and the detection unit 332.

The above-described programs can be stored by using various types of non-transitory computer-readable medium and supplied to a computer such as the computer 40. A non-transitory computer-readable medium includes various types of tangible storage medium. Examples of a non-transitory computer-readable medium include: a magnetic recording medium such as a flexible disk; a magnetic tape, a hard disk drive; a magneto-optical recording medium such as a magneto-optical disk; a CD-ROM (Compact Disc-Read Only Memory); a CD-R (CD-Recordable); a CD-R/W (CD-ReWritable), a semiconductor memory such as a mask ROM; a PROM (Programmable ROM); an EPROM (Erasable PROM); a flash ROM; and a RAM (Random Access Memory). The programs may be supplied to a computer by various types of transitory computer-readable medium. Examples of a transitory computer-readable medium include an electric signal, an optical signal, and an electromagnetic wave. A transitory computer-readable medium can supply a program to a computer via a wired communication path such as an electric wire or an optical fiber, or a wireless communication path.

The input/output interface 404 is connected to a display device 4041, an input device 4042 or the like. The display device 4041 is a device, such as an LCD (Liquid Crystal Display) or a CRT (Cathode Ray Tube) display, that displays a screen corresponding to drawing data processed by the processor 401. The input device 4042 is a device that accepts an operation input from an operator and is, for example, a keyboard, mouse, or a touch sensor. The display device 4041 and the input device 4042 may be integrated together and achieved as a touch panel. The computer 40 includes sensors (not illustrated) including a Distributed Acoustic Sensor, a Distributed Vibration Sensor and a Distributed Temperature Sensor, with such sensors connected to the input/output interface 404.

The communication interface 405 transmits/receives data to/from an external device. For example, the communication interface 405 communicates with an external device via a wired communication path or a wireless communication path.

### <Operation of Example Embodiment>

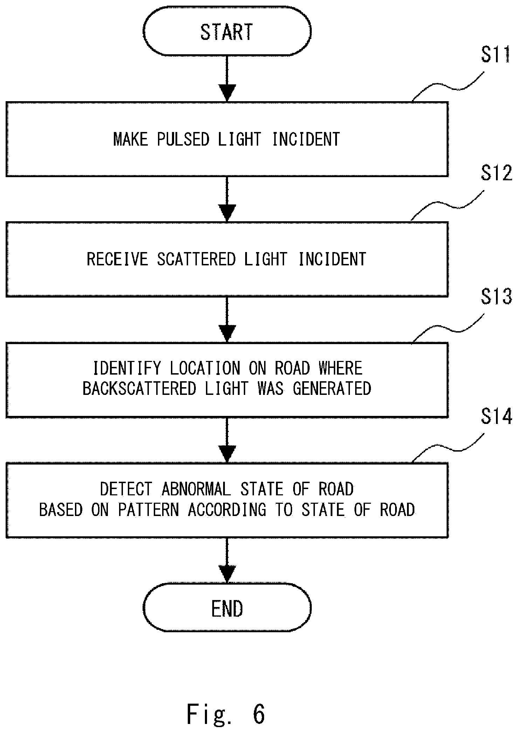

Operation of the road monitoring system according to the example embodiment is described below. Here, an operation flow of the road monitoring system according to the example embodiment is described with reference to Fig. 6.

As illustrated in Fig. 6, the fiber sensing unit 331 first makes a pulsed light incident into at least one communication optical fiber included in the optical fiber cable 20 (step S11).

Next, the fiber sensing unit 331 receives a backscattered light from the same communication optical fiber into which the pulsed light was incident (step S12).

Next, the fiber sensing unit 331 identifies a location on the road 10 where the backscattered light received in step S12 was generated (step S13). The fiber sensing unit 331 may use the above-described time difference-based method to identify a location where the backscattered light was generated. Further, the fiber sensing unit 331 detects a vibration state, a temperature state, a sound state or the like, of an identified location on the road 10.

Thereafter, the detection unit 332 detects a pattern according to the state of the location of the road 10 identified in step S13, based on the backscattered light received in step S12. More specifically, the pattern is detected based on a processing result of the backscattered light by the fiber sensing unit 331. The detection unit 332 then, based on the detected pattern, detect an abnormal state of the location on the road 10 identified in step S13 (step S14). In this process, the detection unit 332 may detect an abnormal state by using either the above-described method A or method B.

In Fig. 6, processing of steps S13 and S14 may be performed each time a backscattered light is received in step S12. Alternatively, after a plurality of backscattered light are received in step S12, processing of steps S13 and S14 may be performed for each backscattered light.

### <Advantageous Effects of Example Embodiment>

As described above, according to the example embodiment, a backscattered light (optical signal) is received from at least one communication optical fiber included in the optical fiber cable 20, a pattern according to a state of the road 10 is detected based on the received backscattered light, and an abnormal state of the road 10 is detected based on the detected pattern. This makes it possible to detect an abnormal state of the road 10 with high accuracy.

According to the example embodiment, detection of an abnormal state of the road 10 requires an existing communication optical fiber alone; coating an optical fiber cable with a steel wire to prevent flaws as in Patent Literature 1 is not required. This removes the need for a social structure for detecting an abnormal state of the road 10, thereby implementing a road monitoring system at low cost.

According to the example embodiment, it is possible to simultaneously and remotely detect an abnormal state of the road 10 by using an existing communication optical fiber. This makes it easy to grasp a state of the road 10 and reduces costs necessary to grasp a state of the road 10.

The example embodiment utilizes an optical fiber sensing technique that employs an optical fiber as a sensor. This offers the following advantages: immunity to electromagnetic noise; no need for power feeding to a sensor; an excellent environmental tolerance; and an easy maintenance.

### <Other Example Embodiments>

The detection unit 332 may hold, for every location on the road 10, the above-detected abnormal state of the road 10 and regularly, for example every year, detect an abnormal state of the location, thereby detecting a chronological state in abnormal state of the location.

The detection unit 332 may detect an abnormality of, or a sign of damage to, a location on the road 10, based on a chronological state change in abnormal state of the location on the road 10.

An analyst may actually disassemble a portion of a location on the road 10 that has been detected as abnormal by the detection unit 332 and determine an actual abnormality level. When there is a difference between the abnormality level detected by the detection unit 332 and that determined by the analyst, the difference may be fed back to the detection unit 332. Afterwards, the detection unit 332 detects an abnormal state of the road 10 so that the detected level will be closer to an actual abnormality level, which approach enhances a detection accuracy.

When the detection unit 332 performs machine learning of a pattern according to a state of the road 10 via the above-described method B, a state of the road 10 differs depending on a region. For example, the state may be different between a warm-weather region and a cold region. Therefore, the detection unit 332 may perform machine learning for each region by using training data according to that particular region.

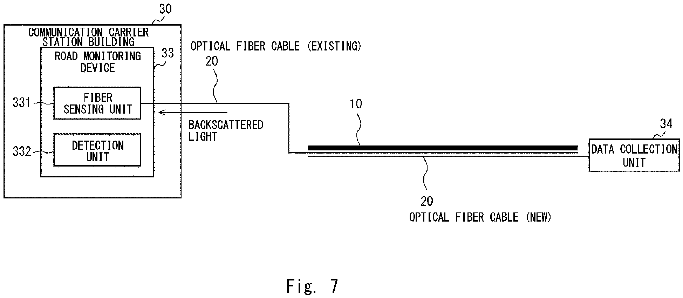

While it is assumed to use an existing optical fiber cable 20 in the above-described example embodiment, an optical fiber cable 20 may be added and a data collection unit 34 may be connected to the new optical fiber cable 20, as illustrated in Fig. 7. The data collection unit 34 also collects data of a pattern of a sound, a temperature or a vibration or the like, of the road 10, and transmits the collected data to the detection unit 332. Data transmission from the data collection unit 34 to the detection unit 332 may be via the optical fiber cable 20 or a separately provided wireless device. The detection unit 332 detects an abnormal state of the road 10 based on data collected by the data collection unit 34 and the fiber sensing unit 331. This enhances a detection accuracy.

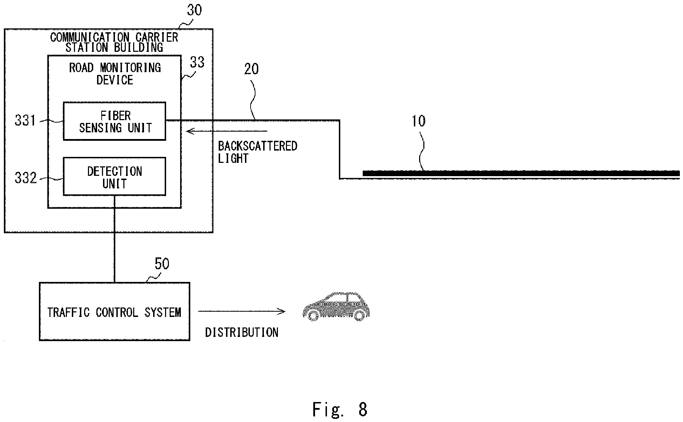

As illustrated in Fig. 8, it is possible to provide a traffic control system 50 for controlling vehicle traffic on the road 10 based on a detection result by the road monitoring device 33. The traffic control system 50 is one example of a distribution unit. Upon detection of an abnormal state of the road 10, the traffic control system 50 may notify a driver of a vehicle of the abnormality detected on the road 10, via a highway radio, a message sign on the road 10, the Internet, an application or the like. When an abnormal state of the road 10 is detected, the traffic control system 50 may distribute an alert on driving a vehicle to a driver of a vehicle. When closing to traffic the road 10 where an abnormality is detected, the traffic control system 50 may distribute road closure information to a driver of a vehicle. The traffic control system 50 may present, to a system administrator or the like, an abnormal state of the road 10, a chronological state change in abnormal state of the road 10, an abnormality of, or a sign of damage to, the road 10, or the like. The traffic control system 50 may calculate a pavement time of the road 10 based on a detection result by the road monitoring device 33 and present the pavement time of the road 10 to a system administrator or the like. While the traffic control system 50 is provided outside the communication carrier station building 30, one or more functions such as a function of the distribution unit may be provided inside the communication carrier station building 30. When a traffic control system 50 is provided outside the communication carrier station building 30, the road 10 connected to each of a plurality of communication carrier station buildings 30 via the optical fiber cable 20 may be centrally monitored by a single traffic control system 50.

The fiber sensing unit 331 and the detection unit 332 of the road monitoring device 33 may be provided separately from each other. For example, it is possible to provide a fiber sensing unit 331 alone inside the communication carrier station building 30 and provide a road monitoring device 33 including a detection unit 332 outside the communication carrier station building 30.

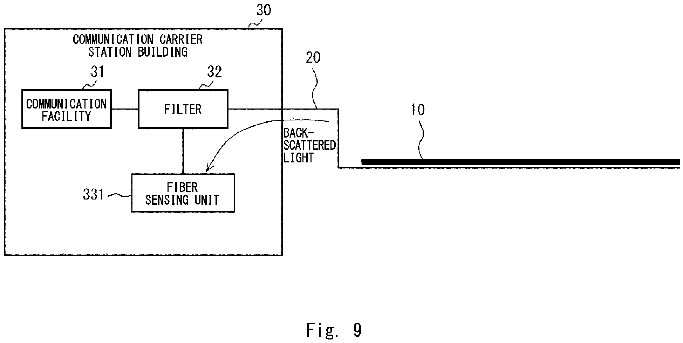

While only a single fiber sensing unit 331 is provided and occupies an optical fiber cable 20 in the above-described example embodiment, this is not limitative. Here, arrangement of a fiber sensing unit 331 in a road monitoring system according to other example embodiments is described with reference to Figs. 9 to 12. In Figs. 9 to 12, a detection unit 332 is not illustrated.

In the example of Fig. 9, the fiber sensing unit 331 shares the optical fiber cable 20 with an existing communication facility 31.

A filter 32 for signal separation is provided or the purpose of sharing the optical fiber cable 20 by the fiber sensing unit 331 and the existing communication facility 31.

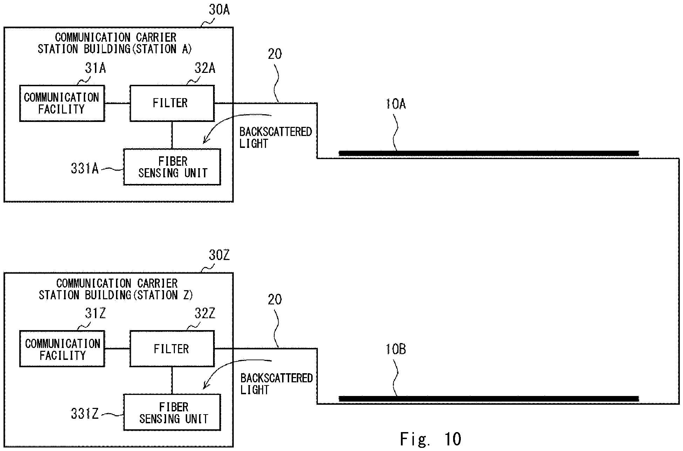

In the example of Fig. 10, a single fiber sensing unit 331 is provided in each of a plurality of communication carrier station buildings 30 (two communication carrier station buildings 30A and 30Z in Fig. 10). To be specific, fiber sensing units 331A and 331Z are provided inside communication carrier station buildings 30A and 30Z, respectively. In the example of Fig. 10, a road 10A is connected to the communication carrier station building 30A via the optical fiber cable 20, a road 10B is connected to the communication carrier station building 30Z via the optical fiber cable 20, and the roads 10A and 10B are interconnected via the optical fiber cable 20. Communication facilities 31A and 31Z correspond to the communication facility 31 and filters 32A and 32Z correspond to the filter 32.

In the example of Fig. 10, both of the fiber sensing units 331A and 331Z monitor the roads 10A and 10B.

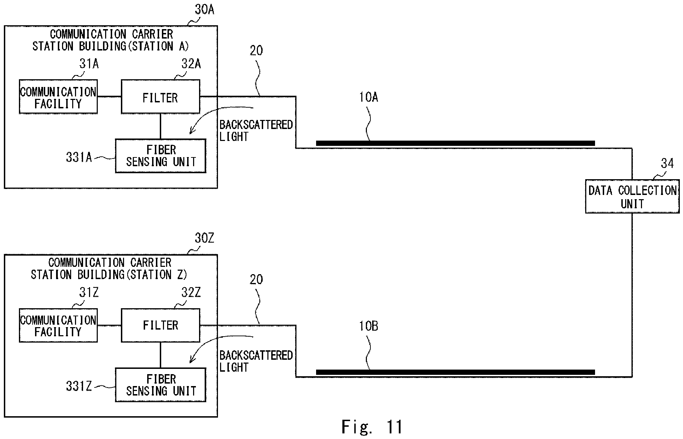

In the example of Fig. 11, unlike Fig. 10, a data collection unit 34 is provided in the vicinity of the road 10A. While only a single data collection unit 34 is provided to the roads 10A and 10B in this example, a single data collection unit 34 shall be provided to a predetermined number of roads 10 or to a predetermined road length of a road 10, and one or more data collection unit 34 may be provided.

In the example of Fig. 11, each data collection unit 34 also collects data of a pattern of a sound, a temperature or a vibration or the like, of a corresponding road 10, and the detection unit 332 summarizes the data collected by the data collection unit 34. In this practice, transmission of data from each data collection unit 34 to the detection unit 332 may be via the optical fiber cable 20 or a separately provided wireless device. The detection unit 332 detects an abnormal state of a road 10 whose data was collected by the data collection unit 34, based on the data.

In this configuration, a monitoring section of a single fiber sensing unit 331 is shortened and the number of roads 10 or a road length thereof subjected to monitoring is reduced. The monitoring section of the fiber sensing unit 331 is shortened, which leads to a reduced transmission distance of a pulsed light and a backscattered light, resulting in a reduced fiber loss. This improves an S/N ratio (signal-to-noise ratio) of a backscattered light to be received and thus enhances a monitoring accuracy. The number of roads 10 or the road length thereof subjected to monitoring by the fiber sensing unit 331 is reduced, which shortens a monitoring cycle.

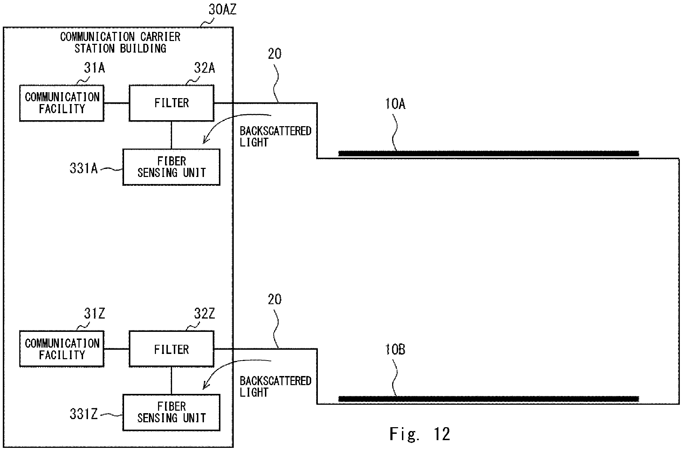

In the example of Fig. 12, a plurality of fiber sensing units 331 (two fiber sensing units 331A and 331Z in Fig. 12) are provided in a single communication carrier station building 30AZ. In the example of Fig. 12, a road 10A is connected to the fiber sensing unit 331A via the optical fiber cable 20, a road 10B is connected to the fiber sensing unit 331Z via the optical fiber cable 20, and the roads 10A and 10B are interconnected via the optical fiber cable 20. Communication facilities 31A and 31Z correspond to the communication facility 31 and filters 32A and 32Z correspond to the filter 32.

In the example of Fig. 12, both of the fiber sensing units 331A and 331Z monitor the roads 10A and 10B. The fiber sensing unit 331A makes a pulsed light incident clockwise to monitor the roads 10A and 10B and the fiber sensing unit 33 1Z makes a pulsed light incident counterclockwise to monitor the roads 10A and 10B

When a plurality of fiber sensing units 331 are provided as in Figs. 10 to 12, a single road monitoring device 33 including a detection unit 332 may be provided to the plurality of fiber sensing units 331. A single road monitoring device 33 may centrally detect a state of the road 10 connected via the optical fiber cable 20 to each of the plurality of fiber sensing units 331. In this case, the road monitoring device 33 may be provided inside any communication carrier station building 30 or outside a communication carrier station building 30.

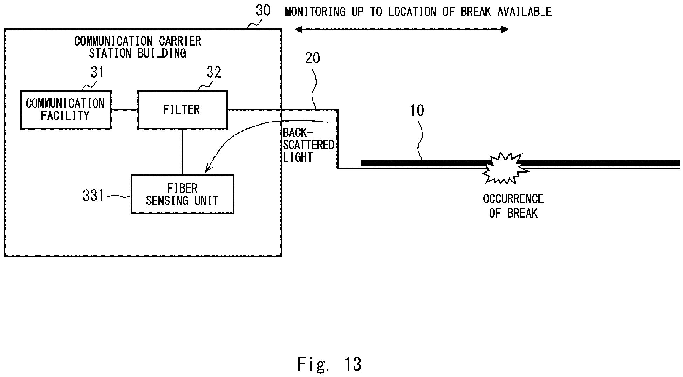

The optical fiber cable 20 laid down on the road 10 can be broken. In view of this, operation of the fiber sensing unit 331 upon a break in the optical fiber cable 20 in a road monitoring system according to other example embodiments is described with reference to Figs. 13 to 15. In Figs. 13 to 15, a detection unit 332 is not illustrated.

The example of Fig. 13 is a case where the optical fiber cable 20 of the road 10 is broken in a configuration of Fig. 9. The fiber sensing unit 331 keeps making a pulsed light incident into the optical fiber cable 20 even upon a break in the optical fiber cable 20. This enables the communication carrier station building 30 to continuously perform monitoring in sections up to a location of a break.

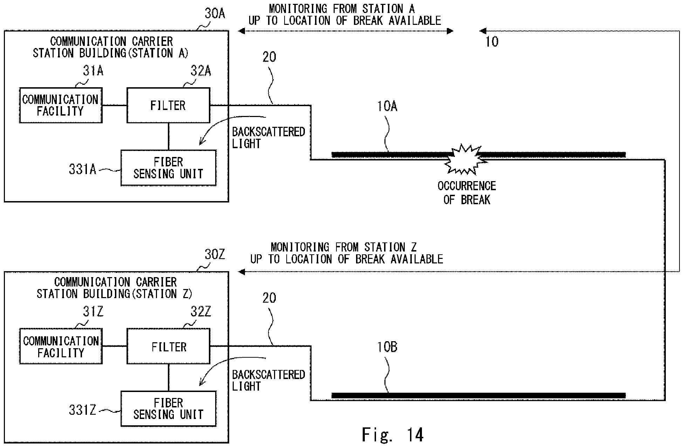

The example of Fig. 14 is a case where the optical fiber cable 20 of the road 10A is broken in a configuration of Fig. 10. The fiber sensing units 331A and 331Z keep making a pulsed light incident into the optical fiber cable 20 even upon a break in the optical fiber cable 20. In the meantime, the road 10 is connected to two or more communication carrier station buildings 30 (two communication carrier station buildings 30A and 30Z in Fig. 14). This makes it possible to implement a redundant configuration where the communication carrier station buildings 30A and 30Z perform bidirectional monitoring thereby assuring continuous monitoring of all sections despite a single fault.

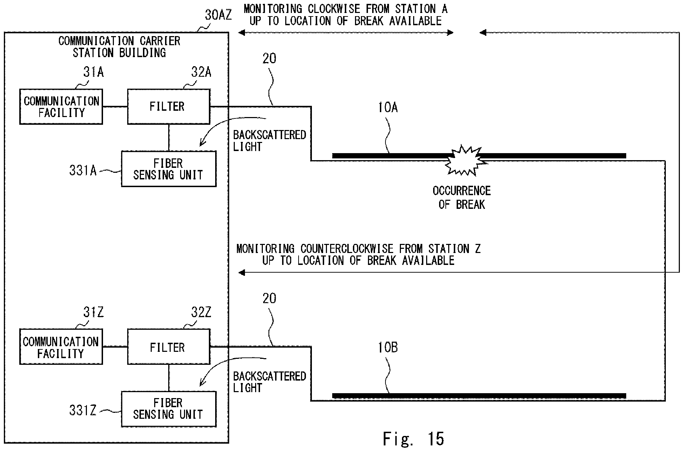

The example of Fig. 15 is a case where the optical fiber cable 20 of the road 10A is broken in a configuration of Fig. 12. The fiber sensing units 331A and 331Z keep making a pulsed light incident into the optical fiber cable 20 even upon a break in the optical fiber cable 20. In the meantime, a ring configuration is implemented where the optical fiber cables 20 are interconnected in a ring shape in the example of Fig. 15. This makes it possible to implement a redundant configuration where a single communication carrier station building 30AZ performs monitoring in a bidirectional direction of the ring thereby assuring continuous monitoring of all sections in the presence of a single fault.

While the invention of the present disclosure has been described above with reference to the example embodiments, the present disclosure is not limited by the above-described example embodiments. Various changes that may be understood by a person skilled in the art can be made to a configuration and details of the present disclosure within the scope of the present disclosure.

The whole or part of the embodiments disclosed above can be described as, but not limited to, the following supplementary notes.
(Supplementary note 1) A road monitoring system comprising:
   a cable including a communication optical fiber, being laid on a road;
   a reception unit configured to receive an optical signal from at least one communication optical fiber included in the cable; and
   a detection unit configured to detect a pattern according to a state of the road, based on the optical signal, and detect an abnormal state of the road, based on the detected pattern according to the state of the road.
(Supplementary note 2) The road monitoring system according to Supplementary note 1, wherein
   the reception unit determines a location on the road in which the optical signal is generated, based on the optical signal; and
   the detection unit detects an abnormal state in the determined location on the road, based on the detected pattern according to the state of the road.
(Supplementary note 3) The road monitoring system according to Supplementary note 1 or 2, further comprising a distribution unit configured to distribute information of the detected abnormal state of the road to a driver of a vehicle.
(Supplementary note 4) A road monitoring device comprising:
   a reception unit configured to receive an optical signal from at least one communication optical fiber included in a cable laid on a road; and
   a detection unit configured to detect a pattern according to a state of the road, based on the optical signal, and detect an abnormal state of the road, based on the detected pattern according to the state of the road.
(Supplementary note 5) The road monitoring device according to Supplementary note 4, wherein
   the reception unit determines a location on the road in which the optical signal is generated, based on the optical signal; and
   the detection unit detects an abnormal state in the determined location on the road, based on the detected pattern according to the state of the road.
(Supplementary note 6) A road monitoring method by the road monitoring device, the method comprising:
   receiving an optical signal from at least one communication optical fiber included in a cable laid on a road; and
   detecting a pattern according to a state of the road, based on the optical signal, and detecting an abnormal state of the road, based on the detected pattern according to the state of the road.
(Supplementary note 7) A non-transitory computer-readable medium that stores a program for causing a computer to execute:
   a procedure of receiving an optical signal from at least one communication optical fiber included in a cable laid on a road; and
   a procedure of detecting a pattern according to a state of the road, based on the optical signal, and detecting an abnormal state of the road, based on the detected pattern according to the state of the road.

This application claims the benefit of priority that is based upon Japanese Patent Application No. 2018-229185, filed on December 6, 2018, the disclosure of which is incorporated herein in its entirety by reference.

### Reference Signs List

- 10, 10A, 10B: Road
- 20: Optical fiber cable
- 30, 30A, 30Z, 30AZ: Communication carrier station building
- 31, 31A, 31Z: Communication facility
- 32, 32A, 32Z: Filter
- 33: Road monitoring device
- 331, 331A, 331Z: Fiber sensing unit
- 332: Detection unit
- 34: Data collection unit
- 40: Computer
- 401: Processor
- 402: Memory
- 403: Storage
- 404: Input/output interface
- 4041: Display device
- 4042: Input device
- 405: Communication interface
- 50: Traffic control system

## Claims

1. A road monitoring system comprising:
a cable including a communication optical fiber, being laid on a road;
a reception unit configured to receive an optical signal from at least one communication optical fiber included in the cable; and
a detection unit configured to detect a pattern according to a state of the road, based on the optical signal, and detect an abnormal state of the road, based on the detected pattern according to the state of the road.

2. The road monitoring system according to Claim 1, wherein
the reception unit determines a location on the road in which the optical signal is generated, based on the optical signal; and
the detection unit detects an abnormal state in the determined location on the road, based on the detected pattern according to the state of the road.

3. The road monitoring system according to Claim 1 or 2, further comprising a distribution unit configured to distribute information of the detected abnormal state of the road to a driver of a vehicle.

4. A road monitoring device comprising:
a reception unit configured to receive an optical signal from at least one communication optical fiber included in a cable laid on a road; and
a detection unit configured to detect a pattern according to a state of the road, based on the optical signal, and detect an abnormal state of the road, based on the detected pattern according to the state of the road.

5. The road monitoring device according to Claim 4, wherein
the reception unit determines a location on the road in which the optical signal is generated, based on the optical signal; and
the detection unit detects an abnormal state in the determined location on the road, based on the detected pattern according to the state of the road.

6. A road monitoring method by the road monitoring device, the method comprising:
receiving an optical signal from at least one communication optical fiber included in a cable laid on a road; and
detecting a pattern according to a state of the road, based on the optical signal, and detecting an abnormal state of the road, based on the detected pattern according to the state of the road.

7. A non-transitory computer-readable medium that stores a program for causing a computer to execute:
a procedure of receiving an optical signal from at least one communication optical fiber included in a cable laid on a road; and
a procedure of detecting a pattern according to a state of the road, based on the optical signal, and detecting an abnormal state of the road, based on the detected pattern according to the state of the road.
